(19) **Europäisches Patentamt**

**European Patent Office**

**Office européen des brevets**

(11) **EP 1 217 028 B1**

(12) **EUROPÄISCHE PATENTSCHRIFT**

(45) Veröffentlichungstag und Bekanntmachung des Hinweises auf die Patenterteilung:
**03.08.2005 Patentblatt 2005/31**

(51) Int Cl.⁷: **C08J 9/30**
// C08L9/02

(21) Anmeldenummer: **01128509.5**

(22) Anmeldetag: **29.11.2001**

(54) **Wässrige Polymerisatdispersion enthaltend Kautschukteilchen und verstärkend wirkende Polymerisatteilchen**

Aqueous polymer dispersion containing rubber particles and reinforcing polymer particles

Dispersion aqueuse de polymère contenant des particules de caoutchouc et des particules polymériques de renforcement

(84) Benannte Vertragsstaaten:
**AT BE CH CY DE DK ES FI FR GB GR IE IT LI LU MC NL PT SE TR**

(30) Priorität: **18.12.2000 DE 10063160**

(43) Veröffentlichungstag der Anmeldung:
**26.06.2002 Patentblatt 2002/26**

(73) Patentinhaber: **BASF AKTIENGESELLSCHAFT 67056 Ludwigshafen (DE)**

(72) Erfinder:
- **Balk, Roelof, Dr.**
  **67459 Böhl-Iggelheim (DE)**
- **Graalmann, Onno, Dr.**
  **69221 Dossenheim (DE)**
- **van der Most, Bernhard, Dr.**
  **7021 EL Zelhem (NL)**

(56) Entgegenhaltungen:
**CA-A- 961 588          US-A- 3 673 133**

**Beschreibung**

Die vorliegende Erfindung betrifft eine wässrige Polymerisatdispersion, welche Kautschukteilchen und verstärkend wirkende Polymerisatteilchen enthält, wobei die Kautschukteilchen aus

- x Gew.-% aromatischer Monovinylverbindung und
  y Gew.-% aliphatischem konjugiertem Dien mit 4 bis 9 Kohlenstoffatomen
  in einpolymerisierter Form aufgebaut sind, und

- x ein Wert von 5 bis 35 und
  y ein Wert von 65 bis 95 ist,

und die verstärkend wirkenden Polymerisatteilchen zu

- 50 bis 90 Gew.-% aus einer ersten, harten Polymerisatphase A und
  10 bis 50 Gew.-% aus einer zweiten, weichen Polymerisatphase B aufgebaut sind, wobei

- die Polymerisatphase A eine Glasübergangstemperatur oberhalb 70 °C aufweist und zu 90 bis 100 Gew.-% aus aromatischer Monovinylverbindung und bis zu 10 Gew.-% aus aliphatischem konjugiertem Dien mit 4 bis 9 Kohlenstoffatomen in einpolymerisierter Form besteht und

- die Polymerisatphase B zu
  x +/- $\leq$ 3 Gew.-% aus der in den Kautschukteilchen verwendeten aromatischen Monovinylverbindung und
  y +/- $\leq$ 3 Gew.-% aus dem in den Kautschukteilchen verwendeten aliphatischen konjugierten Dien mit 4 bis 9 Kohlenstoffatomen in einpolymerisierter Form besteht.

Die Erfindung betrifft ebenfalls ein Verfahren zur Herstellung dieser Polymerisatdispersion sowie deren Verwendung zur Herstellung von Latexschäumen und Schaumformartikeln. Insbesondere betrifft die Erfindung die in der wässrigen Polymerisatdispersion eingesetzten verstärkend wirkenden Polymerisatteilchen und deren Herstellung mittels radikalisch initiierter wässriger Emulsionspolymerisation.

Latexschäume und Latexformartikel werden nach dem Stand der Technik aus wässrigen Kautschukdispersionen unter Zusatz schwefelvernetzender Vulkanisationsmittel durch mechanisches Einschlagen von Luft hergestellt, mittels Zusatz von Gelierungsmitteln geliert und dann in der Wärme zu einem zellartigen, weitestgehend offenporigen Schaum vulkanisiert. Die Herstellung solcher Latexschäume und Latexformartikel wird beispielsweise in der DE-OS 2150872 oder DE-A 19757700 beschrieben. Die Kautschukdispersionen enthalten dabei in der Regel Verstärkerdispersionen, d.h. wässrige Dispersionen von verstärkend wirkenden Polymerisatteilchen. Die Art und die Menge dieser Verstärkerkomponente beeinflussen in hohem Maße das Eigenschaftsbild des fertigen Latexschaums.

Für den Latexschaum wird eine hohe Elastizität insbesondere im Gebrauchstemperaturbereich von 20 bis 70 °C gefordert, die auch bei längerem Zusammendrücken und vor allem im Dauergebrauch nicht verloren gehen darf. Dementsprechend soll der Druckverformungsrest (compression set, nach ISO 1856) in diesem Temperaturbereich möglichst gering sein und die Wiedererholung des zusammengedrückten Formteils möglichst rasch verlaufen, d.h. die Hysterese (nach DIN 53 577) soll ebenfalls möglichst gering sein. Weiterhin soll die Zugfestigkeit und die maximale Dehnung bis zum Bruch (nach ISO 1789) möglichst hoch sein. Ebenso soll bei vorgegebener Eindrückhärte des Schaums (nach ISO 2439A) dessen Dichte möglichst gering sein, um die Schaumartikel im Hinblick auf die erforderliche Einsatzmenge von Kautschukdispersionen möglichst wirtschaftlich herstellen zu können.

Verstärkende Polymerisatteilchen in Form ihrer wässrigen Polymerisatdispersion sind für die gezielte Erhöhung von Härte, Festigkeit und Dehnung von Latexschaum seit langem bekannt. Diese sind in der Regel Styrol/Butadien-Dispersionen mit einem hohen Styrolgehalt bis hin zu 100 Gew.-%. Homogen aufgebaute, d.h. in einem einzigen Verfahrensschritt hergestellte Verstärkerdispersionen werden bereits in der DE-OS 1056364 als unvorteilhaft beschrieben, da sie der Forderung nach niedrigen Werten für den Druckverformungsrest über einen weiten Temperaturbereich nicht genügen. Bessere Ergebnisse erreicht man nach dieser Lehre durch Einsatz von mehrstufigen Pfropfcopolymerisat-Dispersionen mit vergleichbarer Bruttozusammensetzung, die in einem zweistufigen Batch-Verfahren hergestellt werden. Solche Kautschukdispersionen und daraus hergestellte Latexschaumartikel zeichnen sich dadurch aus, dass die der Verstärkerkomponente zuzuordnende Glasübergangstemperatur innerhalb eines relativ schmalen Temperaturbereichs im angesprochenen Intervall von 20 bis 70 °C liegt.

Eine in wesentlichen Punkten verbesserte Ausführungsform einer solchen mehrphasigen Pfropfcopolymerisat-Dispersion wird in der EP-A 187 905 beschrieben. Dort wird insbesondere von semikontinuierlichen Zulaufverfahren Gebrauch gemacht, um Polymerisatpartikel mit unterschiedlichen Monomerzusammensetzungen in den einzelnen Phasen gezielt herzustellen. Die auf Basis dieser Lehre hergestellten Latexschäume zeichnen sich durch eine ausgewogene Eigenschaftskombination mit insbesondere niedrigen Werten für den Druckverformungsrest im gesamten Temperaturbereich von 20 bis 70 °C aus. Die den einzelnen Phasen der Verstärkerkomponente zuzuordnenden Glasübergangstemperaturen decken nach dieser Ausführungsform und im Gegensatz zu früheren Lehren einen möglichst breiten Bereich innerhalb des angesprochenen Intervalls von 20 bis 70 °C ab. Nicht völlig befriedigen kann jedoch die mäßige Sprungelastizität der nach dieser Lehre hergestellten Latexschäume, die sich in relativ hohen Hysteresewerten äußert.

In der EP-A 753 530 werden wässrige Kautschukdispersionen beschrieben, die verstärkend wirkende Polymerisatteilchen enthalten, welche zu 20 bis 75 Gew.-% aus einem harten Polymerisatkern, zu 15 bis 78 Gew.-% aus einer weichen äußeren Phase sowie aus 2 bis 10 Gew.-% an Übergangsbereichen zwischen diesen Phasen, die in ihrer Copolymerisatzusammensetzung zwischen denen der harten und der weichen Phasen liegen, bestehen sollen. Wesentlich ist, dass die verstärkend wirkenden Polymerisatteilchen in Form ihrer wässrigen Dispersion, der wässrigen Kautschukdispersion erst nach deren Agglomeration zugemischt werden.

Darüber hinaus ist dem Fachmann bekannt, dass das Eigenschaftsprofil der Latexschäume generell hinsichtlich der Schaumhomogenität verbessert wird, wenn der Agglomerationsschritt der Kautschukdispersion in Anwesenheit der verstärkend wirkenden Polymerisatteilchen erfolgt (sogenannte Co-Agglomeration). Bisher ist die Co-Agglomeration jedoch nur für die sogenannte Gefrieragglomeration bekannt (siehe hierzu US-A 3,296,178, US-A 3,673,133 und CA-B 961 588). Die Gefrieragglomeration ist jedoch apparativ sehr aufwendig und infolge der hohen Energiekosten wenig wirtschaftlich. Apparativ weit weniger aufwendig und wesentlich kostengünstiger sind sogenannte Druckagglomerationsverfahren. Aufgrund der raschen Verschmutzung und Verstopfung der Apparate, können jedoch die Druckagglomerationsverfahren nicht für die Co-Agglomeration von Kautschukdispersionen eingesetzt werden, welche die bekannten verstärkend wirkenden Polymerisatteilchen enthalten.

Aufgabe der vorliegenden Erfindung war es, verstärkend wirkende Polymerisatteilchen für aufschäumbare Kautschukdispersionen bereitzustellen, die gemeinsam mit den Kautschukdispersionen mittels eines Druckagglomerationsverfahrens coagglomerierbar sind und mit deren Hilfe Latexschäume hergestellt werden können, die eine dem Stand der Technik vergleichbare oder verbesserte Eigenschaftskombination aufweisen.

Demgemäß wurde die oben beschriebene wässrige Polymerisatdispersion, ein Verfahren zu ihrer Herstellung sowie deren Verwendung zur Herstellung von Latexschäumen und Schaumformartikeln gefunden.

Die in der wässrigen Polymerisatdispersion enthaltenden Kautschukteilchen bestehen aus x Gew-% aromatischer Monovinylverbindung und y Gew.-% aliphatischem konjugiertem Dien mit 4 bis 9 Kohlenstoffatomen in einpolymerisierter Form.

Dabei ist x ein Wert von 5 bis 35, oft von 10 bis 30 und alle Werte dazwischen. Häufig ist $x \geq 7, \geq 9, \geq 11, \geq 13, \geq 15, \geq 17, \geq 19, \geq 21, \geq 23$ und $\leq 33, \leq 31, \leq 29, \leq 27, \leq 25, \leq 23, \leq 21, \leq 9$.

Aromatische Monovinylverbindungen im Sinne der Erfindung sind Monomere der allgemeinen Formel $CH_2=CR^1R^2$, wobei $R^1$ ein aromatischer Kern mit 6 bis 10 Kohlenstoffatomen ist, der auch weitere Alkylreste und/oder Halogensubstituenten enthalten kann. $R^2$ ist Wasserstoff oder ein Alkylrest mit 1 bis 4 Kohlenstoffatomen. Bevorzugte aromatische Monovinylverbindungen sind aus Gründen der Wirtschaftlichkeit und Verfügbarkeit Styrol, α-Methylstyrol und Vinyltoluol, wobei Styrol besonders bevorzugt ist. Selbstverständlich können auch Gemische verschiedener aromatischer Monovinylverbindungen eingesetzt werden.

Erfindungsgemäß ist y ein Wert von 65 bis 95, oft von 70 bis 90 und alle Werte dazwischen. Häufig ist $y \geq 67, \geq 69, \geq 71, \geq 73, \geq 75, \geq 77, \geq 79$ und $\leq 93, \leq 91, \leq 89, \leq 87, \leq 85, \leq 83, \leq 81, \leq 79, \leq 77$.

Geeignete aliphatische konjugierte Diene mit 4 bis 9 Kohlenstoffatomen sind das 1,3-Butadien sowie substituierte Butadiene, wie beispielsweise das 2-Chlor- bzw. das 2-Methyl-1,3-butadien. Ferner eignen sich konjugierte, gerad- und verzweigtkettige Pentadiene und Hexadiene sowie weitere gerad- oder verzweigtkettige konjugierte Diene mit bis zu 9 Kohlenstoffatomen. Selbstverständlich können auch Gemische verschiedener aliphatischer Diene eingesetzt werden. Aus Gründen der Wirtschaftlichkeit und der vorteilhaften Eigenschaften in Copolymerisaten ist das 1,3-Butadien besonders bevorzugt.

Weitere olefinisch ungesättigte, copolymerisierbare Monomere, wie Acrylate und Methacrylate, beispielsweise Methylmethacrylat, $C_3$- bis $C_5$-Mono- und $C_4$- bis $C_8$-Dicarbonsäuren und deren wasserlöslichen Salze, wie Acrylsäure, Methacrylsäure, Maleinsäure, Fumarsäure, Itaconsäure sowie deren Alkalimetall- und Ammoniumsalze oder sogenannte vernetzende Monomere, beispielsweise die Di-Ester zweiwertiger Alkohole, wie Alkylenglykoldiacrylate und -dimethacrylate sowie Divinylbenzol, Vinylmethacrylat, Vinylacrylat, Allylmethacrylat, Allylacrylat, Diallymaleat, Diallylfumarat oder Cyclopentadienylacrylat und die Methacrylsäure- und Acrylsäure-$C_1$-$C_8$-Hydroxyalkylester können bei Bedarf ebenfalls im Kautschukpolymerisat enthalten sein. Die Summe dieser Monomere in einpolymerisierter Form, bezogen auf die Gesamtmenge des Kautschukpolymerisats, beträgt jedoch $\leq 10$ Gew.-%, oft $\leq 5$ Gew.-% und insbesondere $\leq 2$ Gew.-%.

Die Summe aus x und y ist daher $\geq 90$, oft $\geq 95$ oder $\geq 98$ und häufig 100.

Die verstärkend wirkenden Polymerisatteilchen sind aus 50 bis 90 Gew.-%, bevorzugt 60 bis 80 Gew.-%, aus einer ersten, harten Polymerisatphase A und 10 bis 50 Gew.-%, bevorzugt 20 bis 40 Gew.-%, aus einer zweiten, weichen Polymerisatphase B aufgebaut.

Wesentlich ist, dass die Polymerisatphase A eine Glasübergangstemperatur oberhalb 70 °C, bevorzugt $\geq$ 90 °C, aufweist und zu 90 bis 100 Gew.-% aus aromatischer Monovinylverbindung, insbesondere Styrol und bis zu 10 Gew.-% aus aliphatischem konjugiertem Dien mit 4 bis 9 Kohlenstoffatomen, insbesondere 1,3-Butadien, in einpolymerisierter Form besteht. Zu beachten ist jedoch, dass neben dem konjugierten aliphatischen Dien optional auch noch die vorgenannten weiteren copolymerisierbaren Monomere einpolymerisiert sein können.

Mit der Glasübergangstemperatur (Tg), ist der Grenzwert der Glasübergangstemperatur gemeint, dem diese gemäß G. Kanig (Kolloid-Zeitschrift & Zeitschrift für Polymere, Bd. 190, Seite 1, Gleichung 1) mit zunehmendem Molekulargewicht zustrebt. Die Glasübergangstemperatur wird nach dem DSC-Verfahren ermittelt (Differential Scanning Calorimetry, 20 K/min, midpoint-Messung, DIN 53 765).

Nach Fox (T.G. Fox, Bull. Am. Phys. Soc. 1956 [Ser. II] 1, Seite 123 und gemäß Ullmann's Encyclopädie der technischen Chemie, Bd. 19, Seite 18, 4. Auflage, Verlag Chemie, Weinheim, 1980) gilt für die Glasübergangstemperatur von höchstens schwach vernetzten Mischpolymerisaten in guter Näherung:

$$1/T_g = x^1/T_g{}^1 + x^2/T_g{}^2 + .... x^n/T_g{}^n,$$

wobei $x^1$, $x^2$, .... $x^n$ die Massenbrüche der Monomeren 1, 2, .... n und $T_g{}^1$, $T_g{}^2$, .... $T_g{}^n$ die Glasübergangstemperaturen der jeweils nur aus einem der Monomeren 1, 2, .... n aufgebauten Polymerisaten in Grad Kelvin bedeuten. Die $T_g$-Werte für die Homopolymerisate der meisten Monomeren sind bekannt und z.B. in Ullmann's Ecyclopedia of Industrial Chemistry, 5. Aufl., Vol. A21, Seite 169, Verlag Chemie, Weinheim, 1992, aufgeführt; weitere Quellen für Glasübergangstemperaturen von Homopolymerisaten bilden z.B. J. Brandrup, E.H. Immergut, Polymer Handbook, 1st Ed., J. Wiley, New York, 1966; 2nd Ed. J.Wiley, New York, 1975 und 3rd Ed. J. Wiley, New York, 1989.

Die Polymerisatphase B besteht zu

x +/- $\leq$ 3 Gew.-% aus der in den Kautschukteilchen verwendeten aromatischen Monovinylverbindung und

y +/- $\leq$ 3 Gew.-% aus dem in den Kautschukteilchen verwendeten aliphatischen konjugierten Dien mit 4 bis 9 Kohlenstoffatomen in einpolymerisierter Form.

Erfindungswesentlich ist, dass die Polymerisatzusammensetzung der Polymerisatphase B und die Polymerisatzusammensetzung der Kautschukteilchen - bzw. bei deren möglichen Stufenpolymerisaten, der der äußeren bzw. der der weicheren Polymerisatphase - möglichst ähnlich oder sogar gleich sind. Daher beträgt die Abweichung der Polymerisatzusammensetzung der Polymerisatphase B zur Polymerisatzusammensetzung der Kautschukteilchen, bezogen auf den Gehalt x an aromatischer Monovinylverbindung und den Gehalt y an aliphatischem konjugiertem Dien in einpolymerisierter Form, oft +/- $\leq$ 2,5 Gew.-%, +/- $\leq$ 2,0 Gew.-%, häufig +/- $\leq$ 1,5 Gew.-%, +/- $\leq$ 1,0 Gew.-% oder sogar +/- $\leq$ 0,5 Gew.-%. Vorteilhaft haben die Kautschukteilchen und die Polymerisatphase B die gleiche Zusammensetzung. Sind daher in den Kautschukteilchen neben der aromatischen Monovinylverbindung und dem aliphatischen konjugierten Dien weitere der oben genannten weiteren ethylenisch ungesättigten Monomere einpolymerisiert, so ist es vorteilhaft, wenn diese in den entsprechenden Gehalten auch in die Polymerisatphase B einpolymerisiert wurden.

Die Herstellung der Kautschukteilchen erfolgt durch radikalische wässrige Emulsionspolymerisation nach üblichen Verfahren einschließlich Zulaufverfahren, semikontinuierlichen Zulaufverfahren und Batch-Verfahren. Bevorzugt ist die semikontinuierliche Fahrweise, wobei die Monomere in reiner oder voremulgierter Form zusammen mit dem Polymerisationsmedium und mindestens einem Emulgator in einem Reaktor vorgelegt werden und vorzugsweise ohne vorherige Bildung eines Saatlatex unter Zugabe eines Radikalinitiators polymerisiert werden. Der Radikalinitiator kann dabei auch teilweise vorgelegt oder vollständig über einen Zulauf nach Maßgabe seines Verbrauchs zur Aufrechterhaltung der Polymerisation dem Polymerisationsreaktor zugeführt werden.

Als Monomere werden 5 bis 35 Gew.-%, oft 10 und 30 Gew.-% und alle Werte dazwischen, wenigstens einer der voran genannten aromatischen Monovinylverbindungen, bevorzugt jedoch Styrol, und 65 bis 95 Gew.-%, oft 70 bis 90 Gew.-% und alle Werte dazwischen, wenigstens eines der voran genannten aliphatischen konjugierten Diene, bevorzugt jedoch 1,3-Butadien, zur wässrigen Emulsionspolymerisation eingesetzt. An dieser Stelle sei festgehalten, dass die in der Beschreibung genannten prozentualen Mengengehalte der in den Polymerisaten der Kautschukteilchen und den Polymerisatphasen A und B der verstärkend wirkenden Polymerisatteilchen in einpolymerisierter Form enthaltenen aromatischen Monovinylverbindungen, aliphatischen konjugierten Dienen und gegebenenfalls weiteren olefinisch ungesättigten Monomeren generell den Mengengehalten dieser Monomere in den zu polymerisierenden Monomerenmischungen entsprechen sollen und umgekehrt.

Das Polymerisationsmedium kann nur aus Wasser oder aber auch aus Mischungen von Wasser und wassermischbaren Flüssigkeiten, wie z.B. Methanol, bestehen. Vorzugsweise wird nur Wasser verwendet.

Die radikalische wässrige Emulsionspolymerisation kann bei Normaldruck, unter erhöhtem oder reduziertem Druck erfolgen. Insbesondere bei der Verwendung von gasförmigen Monomeren, wie z.B. 1,3-Butadien, kann die Polymerisation unter erhöhtem Druck erfolgen.

Die Polymerisationstemperatur beträgt in der Regel 0 bis 100 °C. Höhere Polymerisationstemperaturen, z. B. bis 130 °C, sind möglich. Vorzugsweise liegt die Polymerisationstemperatur jedoch bei geringeren Werten von etwa 0 bis 50 °C, bevorzugt etwa 0 bis 30 °C.

Zur Herstellung der Kautschukteilchendispersion werden dem Polymerisationsansatz Emulgatoren und/oder Schutzkolloide in einer Menge von 0,05 bis 15 Gew.-%, bevorzugt 1 bis 10 Gew.-%, bezogen auf die Gesamtmonomermenge, zugesetzt.

Geeignete Emulgatoren sind die dem Fachmann bekannten, üblicherweise bei der wässrigen Emulsionspolymerisation als Dispergiermittel eingesetzten Emulgatoren, wie sie z.B. in Houben-Weyl, Methoden der organischen Chemie, Band XIV/1, Makromolekulare Stoffe, Seiten 411 bis 420, Georg-Thieme-Verlag, Stuttgart, 1961, beschrieben sind. Es sind sowohl anionische, kationische und nichtionische Emulgatoren geeignet. Vorzugsweise werden anionische Emulgatoren und insbesondere Seifen eingesetzt.

Geeignete anionische Emulgatoren sind die Salze von $C_8$-$C_{18}$-Fettsäuren mit Alkalimetallen, wie Natrium und Kalium, mit Ammonium, flüchtigen Aminen, wie Triethylamin, Ethanolamin, Diethanolamin, Triethanolamin, Morpholin etc. und mit zwei- und dreiwertigen Kationen, wie z.B. Calcium, Magnesium, Aluminium, etc. Weitere geeignete anionische Emulgatoren sind beispielsweise Alkali- und Ammoniumsalze von Alkylsulfaten (Alkylrest: $C_8$-$C_{22}$), von Schwefelsäurehalbestern ethoxylierter Alkanole (EO-Grad: 2 bis 50, Alkylrest: $C_{12}$-$C_{18}$) und ethoxylierter Alkylphenole (EO-Grad: 3 bis 50, Alkylrest: $C_4$-$C_9$), von Alkylsulfonsäuren (Alkylrest: $C_{12}$-$C_{18}$) und von Alkylarylsulfonsäuren (Alkylrest: $C_9$-$C_{18}$). Weitere geeignete Emulgatoren finden sich in Houben-Weyl, Methoden der organischen Chemie, Band XIV/1, Makromolekulare Stoffe, Seiten 192 bis 208, Georg-Thieme-Verlag, Stuttgart, 1961. Als anionische Emulgatoren sind ebenfalls Bis(phenoylsulfonsäure)ether bzw. deren Alkali- oder Ammoniumsalze, die an einem oder beiden aromatischen Ringen eine $C_4$-$C_{24}$-Alkylgruppe tragen, geeignet. Diese Verbindungen sind allgemein bekannt, z. B. aus der US-A-4,269,749, und im Handel, beispielsweise als Dowfax® 2A1 (Dow Chemical Company), erhältlich.

Bevorzugte Emulgatoren sind die Natron- oder Kaliseifen der Palmitinsäure, Margarinsäure, Stearinsäure, Palmitoleinsäure und Ölsäure und die Harzseifen (Resinate), wie z.B. die Natrium- oder Kaliumsalze der Ricinolsäure, Abietinsäure, Pimarsäure etc.

Um eine ausreichende Bedeckung der Teilchen zu erreichen, liegt die Einsatzmenge von Seifen als Emulgatoren im allgemeinen bei etwa 1 bis 10 Gew.-%, bezogen auf die Gesamtmenge an zu polymerisierenden Monomeren.

Geeignete Schutzkolloide sind die üblichen bei den vorzugsweise alkalischen pH-Werten der Kautschukteilchendispersionen stabilen Schutzkolloide. Eine ausführliche Beschreibung von Schutzkolloiden findet sich in Houben-Weyl, Methoden der organischen Chemie, Band XIV/1, Makromolekulare Stoffe, Seiten 411 bis 420, Georg-Thieme-Verlag, Stuttgart, 1961. Geeignete Schutzkolloide sind Phenol- und Naphthalinsulfonsäure-Formaldehyd-Kondensate, wie z.B. die Tamol®-Marken der BASF AG. Die eingesetzte Menge beträgt im allgemeinen etwa 0,1 bis 2 Gew.-%, bezogen auf die Gesamtmenge der zu polymerisierenden Monomere.

Als Radikalinitiatoren können sämtliche unter den Polymerisationsbedingungen in Radikale zerfallende Verbindungen eingesetzt werden, z.B. Peroxide, Hydroperoxide, Wasserstoffperoxid, Persulfate, Azoverbindungen und die sogenannten Redoxkatalysatoren. Bevorzugt ist der Einsatz von wasserlöslichen Radikalinitiatoren. In manchen Fällen ist es vorteilhaft, Mischungen verschiedener Polymerisationsinitiatoren zu verwenden, z.B. Mischungen aus Wasserstoffperoxid und Natrium- oder Kaliumperoxodisulfat. Mischungen aus Wasserstoffperoxid und Natriumperoxodisulfat können in jedem beliebigen Verhältnis verwendet werden. Ebenfalls als Radikalinitiatoren geeignete organische Peroxide sind in der EP-A 536 597 beschrieben. Die genannten Radikalinitiatoren werden in üblichen Mengen eingesetzt, z.B. in Mengen von 0,01 bis 5, vorzugsweise 0,1 bis 3,0 Gew.-%, bezogen auf die Gesamtmenge der zu polymerisierenden Monomere.

Vorzugsweise werden Radikalinitiatoren eingesetzt, die eine Initiierung der Polymerisation auch bei geringen Temperaturen, wie ca. 0 bis 50 °C, bevorzugt ca. 10 bis 30 °C, ermöglichen. Für Polymerisationen, vor allem bei tiefen Temperaturen, werden bevorzugt Redoxinitiatoren verwendet, die wenigstens ein Reduktionsmittel und ein Oxidationsmittel umfassen. Geeignete Oxidationsmittel sind dabei die zuvor genannten Peroxide und/oder Hydroperoxide. Bevorzugt sind kombinierte Systeme, die zusätzlich eine geringe Menge einer im Polymerisationsmedium löslichen Metallverbindung enthalten können, die in mehreren Wertigkeitsstufen auftreten kann. Geeignete Redoxinitiatorsysteme für das erfindungsgemäße Verfahren umfassen als reduzierende Komponente z.B. Ascorbinsäure, Glukose, Sorbose, Ammonium- oder Alkalimetallhydrogensulfit, -sulfit, -thiosulfat, -hyposulfit, -pyrosulfit oder -sulfid, Salze der Hydroxymethansulfinsäure, bevorzugt das Natriumsalz, erhältlich als Rongalit® der BASF AG sowie Acetonbisulfitaddukte etc.

Geeignete oxidierende Komponenten sind Wasserstoffperoxid, t-Butylhydroperoxid, Diisopropylphenylhydroperoxid (DIHP), Ammonium- und/oder Alkalimetallperoxodisulfate etc. Geeignete metallische Komponenten sind wasserlösliche Fe-(II)-Salze, z.B. Fe-(II)-sulfat, Silbersalze, Kombinationen aus wasserlöslichen Fe/V-Salzen etc.

Bevorzugte Redoxinitiatoren sind:

- DIHP/Acetonbisulfitaddukt,
- DIHP/Hydroxymethansulfinsäure-Natriumsalz,
- Ascorbinsäure/Fe-(II)-sulfat/Wasserstoffperoxid.

Werden als Initiatorsysteme Redoxinitiatoren eingesetzt, so liegt die Menge der reduzierenden Komponente im allgemeinen bei etwa $3 \times 10^{-6}$ bis 1 Mol.-% und die der oxidierenden Komponente im allgemeinen bei etwa 0,001 bis 5,0 Mol.-%, bezogen auf die Gesamtmenge der bei der Polymerisation eingesetzten Monomeren.

Der Polymerisatfeststoffgehalt der erhaltenen wässrigen Kautschukteilchendispersionen beträgt üblicherweise 10 bis 70 Gew.-%, insbesondere 20 bis 60 Gew.-%.

Die Kautschukteilchen weisen in der Regel einen gewichtsmittleren Teilchendurchmesser von 30 bis 120 nm, bevorzugt 40 bis 100 nm auf. Unter gewichtsmittlerem Teilchendurchmesser wird in dieser Schrift der sogenannte $D_{50}$-Wert verstanden, welcher über eine Bestimmung mittels Analytischer Ultrazentrifuge zugänglich ist (vgl. hierzu S.E. Harding et al., Analytical Ultracentrifugation in Biochemistry and Polymer Science, Royal Society of Chemistry, Cambridge, Great Britain 1992, Chapter 10, Analysis of Polymer Dispersions with an Eight-Cell-AUC-Multiplexer: High Reslution Particle Size Distribution and Density Gradient Techniques, W. Mächtle, Seiten 147 bis 175).

Die Herstellung der verstärkend wirkenden Polymerisatteilchen erfolgt über eine zweistufige radikalisch initiierte wässrige Emulsionspolymerisation. Zur Polymerisation der harten Polymerisatphase A wird die benötigte Menge an Monomerenmischung A in einem Zulaufverfahren zugegeben und in der wässrigen Phase unter fortwährendem kräftigem Rühren emulgiert. Entsprechende Mengen an Radikalinitiator und Emulgator werden ebenso in einem Zulaufverfahren zugegeben, um die Emulsionspolymerisation in Gang zu bringen. Die Monomerenmischung A und der Emulgator können im gleichen Sinne auch als wässrige Emulsion zugegeben werden. Alternativ dazu kann ein Teil der Monomerenmischung A mit einem darauf abgestimmten Anteil an Radikalinitiator und Emulgator vorgelegt und in einer Batchreaktion polymerisiert werden. Die restlichen Mengen an Monomerenmischung A, Emulgator und Radikalinitiator werden dann im Anschluß im Zulauf zudosiert. Die Mengen an Radikalinitiator, Emulgator und Monomerenmischung A werden dabei in einer dem Fachmann geläufigen Art so zueinander abgestimmt, dass der zahlenmittlere Teilchendurchmesser zwischen 50 und 200 nm und bevorzugt zwischen 80 und 150 nm liegt. Unter zahlenmittlerem Teilchendurchmesser der Polymerisatteilchen ist der durch dynamische Lichtstreuung an einer 0,005 bis 0,01 gewichtsprozentigen wässrigen Dispersion ermittelte Teilchendurchmesser zu verstehen. Angegeben wird der mittlere Durchmesser der Kumulantenauswertung (cumulant z-average) der gemessenen Autokorrelationsfunktion.

Wesentlich ist, dass durch geeignete Wahl der Reaktionsbedingungen, wie beispielsweise Reaktionstemperatur, -druck und -dauer, Zulaufzeiten der Monomerenmischung A bzw. Radikalinitiator etc., der Monomerenumsatz am Ende dieser ersten Reaktionsstufe ≥ 98 %, bevorzugt ≥ 98,5 % und insbesondere bevorzugt ≥ 99 % beträgt.

Die Polymerisation der weichen Polymerisatphase B erfolgt in Anwesenheit der Polymerisatphase A. Hierzu werden x +/- ≤ 3 Gew.-% der wenigstens einen zur Herstellung der Kautschukteilchen verwendeten aromatischen Monovinylverbindung und y +/- ≤ 3 Gew.-% des wenigstens einen zur Herstellung der Kautschukteilchen verwendeten aliphatischen konjugierten Diens sowie gegebenenfalls den weiteren olefinisch ungesättigten Monomeren, separat oder in Mischung, komplett oder in einzelnen Chargen zur wässrigen Dispersion der Polymerisatphase A zugegeben oder in einer bevorzugten Ausführungsform in einem Zulaufverfahren zudosiert. Radikalinitiator und Emulagtor werden bevorzugt so zugegeben oder zudosiert, dass während dieser Zugabe keine Bildung von neuen Teilchen stattfindet. Es wird vielmehr darauf abgezielt, dass sich die Polymerisatphase B auf den vorliegenden Teilchen der Polymerisatphase A abscheidet und diese bis zu einem zahlenmittleren Durchmesser von 100 bis 250 nm, bevorzugt 120 bis 200 nm, weiter wachsen. Die Reaktionsführung während der Polymerisation der Polymerisatphase B erfolgt dergestalt, dass der Gesamtumsatz der Monomeren am Ende der Polymerisation mindestens 95 %, bevorzugt aber mehr als 98 % beträgt.

Zur Stabilisierung der erfindungsgemäßen Verstärkerdispersionen werden die üblichen Fettseifen und/oder Harzseifen eingesetzt, die zu Polymerisatdispersionen mit erhöhtem pH-Wert zwischen 8 und 11 führen. Entsprechend der Alkalität dieser Emulgatoren findet auch die Polymerisation bei diesen pH-Werten statt. Der Gehalt an Emulgator beträgt zwischen 0,5 und 10 Gew.-%, bevorzugt zwischen 2 und 5 Gew.-%, jeweils bezogen auf die Gesamtmenge an Monomerenmischung A und B.

Zur Polymerisation werden, bezogen auf die Gesamtmenge der Monomerenmischungen A und B, 0,01 bis 5 Gew.-%, bevorzugt 0,05 bis 3 Gew.-% an Radikalinitiatoren eingesetzt. Dazu eignen sich öl- und/oder wasserlösliche Azoinitiatoren, Peroxide, Hydroperoxide und Peroxodisulfate. Bei der Polymerisation bei höheren Temperaturen werden bevorzugt Peroxodisulfate eingesetzt. Wird dagegen bei tiefer Temperatur polymerisiert, werden bevorzugt Peroxide und Hydroperoxide in Kombination mit einem Reduktionsmittel eingesetzt. Als Reduktionsmittel eignen sich beispielsweise Natriumbisulfit, Ascorbinsäure und Natriumformaldehydsulfoxylat, bevorzugt auch in Kombination mit Metallsalzen, insbesondere einem Eisen-(II/III)-salz. Die Polymerisationstemperatur beträgt je nach Initiatorsystem 0 bis 100 °C, bevorzugt 60 bis 95 °C bei Verwendung eines Peroxodisulfats als Initiator und bevorzugt zwischen 10 und 70 °C bei Verwendung eines Redox-Initiatorsystems.

Weiterhin können sogenannte Kettenüberträger zur Regelung des Molekulargewichts und des Vernetzungsgrads eingesetzt werden. Bevorzugt sind insbesondere aliphatische, gerad- oder verzweigtkettige Mercaptane in einer Menge von 0,05 bis 2 Gew.-% bezogen auf die Gesamtmenge der Monomerenmischungen A und B.

Der Polymerisatfeststoffgehalt der erfindungsgemäßen Verstärkerdispersion beträgt zwischen 30 und 70 Gew.-%, vorzugsweise zwischen 40 und 60 Gew.-%. Der zahlenmittlere Teilchendurchmesser beträgt am Ende der Polymerisation 100 bis 250 nm, bevorzugt 120 bis 200 nm.

Gegebenenfalls kann es erforderlich sein, die wässrige Dispersion der Kautschukteilchen und/oder der verstärkend wirkenden Polymerisatteilchen im Anschluß an die Polymerisation weitgehend frei von Geruchsträgern, wie Restmonomere und anderen organischen flüchtigen Bestandteilen zu gestalten. Dies kann in an sich bekannter Weise physikalisch durch destillative Entfernung (insbesondere über Wasserdampfdestillation) oder durch Abstreifen mit einem inerten Gas (beispielsweise Stickstoff) erreicht werden. Die Absenkung der Restmonomere kann weiterhin chemisch durch eine dem Fachmann geläufige radikalische Nachpolymerisation, insbesondere unter Einwirkung von Redoxinitiatorsystemen erfolgen.

Zur Herstellung der erfindungsgemäßen wässrigen Polymerisatdispersion, werden die wässrige Dispersion der Kautschukteilchen und die wässrige Dispersion der verstärkend wirkenden Polymerisatteilchen vereinigt und homogen gemischt. Dabei werden die Mengenverhältnisse beider Dispersionen so gewählt, dass in der vereingten wässrigen Polymerisatdispersion 1 bis 40 Gew.-Teile, bevorzugt 10 bis 30 Gew.-Teile, verstärkend wirkende Polymerisatteilchen pro 100 Gew.-Teilen Kautschukteilchen resultieren.

Die erhaltene wässrige Polymerisatdispersion wird nun einem anschließenden Agglomerationsschritt, beispielsweise mittels der dem Fachmann geläufigen chemischen Agglomeration, Gefrieragglomeration oder insbesondere der Druckagglomeration, unterzogen. Der Agglomerationsschritt bewirkt, dass sich die feinen Kautschukteilchen unter An- und/oder Einlagerung der verstärkend wirkenden Polymerisatteilchen zu gröberen Teilchen coagglomerieren.

Der gewichtsmittlere Teilchendurchmesser $D_{50}$ der coagglomerierten Polymerisatteilchen beträgt in der Regel 80 bis 2000 nm, bevorzugt 100 bis 1500 nm.

Während oder nach dem Agglomerationsschritt wird die wässrige Dispersion der coagglomerierten Teilchen durch dem Fachmann geläufige Maßnahmen auf Polymerisatfeststoffgehalte ≥ 60 Gew.-%, bevorzugt ≥ 65 Gew.-%, aufkonzentriert.

Die resultierende wässrige Dispersion der coagglomerierten Teilchen wird dann mit den üblichen Verarbeitungshilfsmitteln sowie weiteren Additiven unter Einschlagen von Luft oder inerten Gasen, wie beispielsweise Stickstoff, verschäumt und anschließend vulkanisiert. Als weitere Additive können insbesondere weitere Stabilisatoren, wie beispielsweise Fett- und/oder Harzseifen, Alterungs- und Lichtschutzmittel, Verdickungsmittel sowie organische und/oder anorganische Füllstoffe (beispielsweise Kreide oder Stärke) zugesetzt werden. Solche Schäume eignen sich vorteilhafterweise zur Rückenbeschichtung von textilen Bodenbelägen sowie zur Herstellung von Schaumformartikeln aller Art und insbesondere zur Herstellung von Latexmatratzen. In diesen Artikeln zeigt der Schaum aus den erfindungsgemäßen Dispersionen eine ausgewogene Kombination der Eigenschaften Härte, Druckverformungsrest, Festigkeit und Dehnung. Besonders vorteilhaft ist, dass die erfindungsgemäße Polymerisatdispersion mittels der kostengünstigen Druckagglomeration agglomeriert werden kann, ohne dass es zu störenden Ablagerungen oder Verstopfungen der Druckspalte kommt.

Von Bedeutung ist, dass die vorliegende Erfindung auch wässrige Polymerisatdispersionen mit umfassen soll, deren in einem separaten Schritt in wässriger Dispersion hergestellten Kautschukteilchen zuerst mittels eines der bekannten Verfahren agglomeriert und daran anschließend die wässrige Dispersion der verstärkend wirkenden Polymerisatteilchen und die in wässrigem Medium vorliegenden Kautschukteilchenagglomerate miteinander gemischt werden. Selbstverständlich ist es auch möglich, jede der beiden Dispersionen separat vor der Vermischung oder gemeinsam nach der Vermischung aufzukonzentrieren.

Die Erfindung wird anhand der folgenden nicht einschränkenden Beispiele näher erläutert.

Beispiele

Analytik

Die gewichtsmittleren Teilchendurchmesser ($D_{50}$-Wert) wurden in einer analytischen Ultrazentrifuge (AUZ) nach W. Mächtle, Makromolekulare Chemie 185, 1984, Seiten 1025 bis 1039, bestimmt.

Die zahlenmittleren Teilchendurchmesser der Polymerisatteilchen wurden durch dynamische Lichtstreuung an einer 0,005 bis 0,01 gew.-%igen wässrigen Dispersion bei 23 °C mittels eines Autosizer IIC der Fa. Malvern Instruments, England, ermittelt. Angegeben wird der mittlere Durchmesser der Kumulantenauswertung (cumulant z-average) der gemessenen Autokorrelationsfunktion (ISO-Norm 13 321).

Die Feststoffgehalte wurden bestimmt, indem eine aliquote Menge der wässrigen Polymerisatdispersion bei 140 °C in einem Trockenschrank bis zur Gewichtskonstanz getrocknet wurde. Es wurden jeweils zwei separate Messungen durchgeführt. Der in den jeweiligen Beispielen angegebene Wert stellt den Mittelwert der beiden Meßergebnisse dar.

Die Dichte der Polymerisatdispersionsschäume wurde nach ISO 845 bestimmt.

Die Härte der Polymerisatdispersionsschäume wurde bestimmt als Eindruckhärte nach ISO 2439A, entsprechend 40 % Eindrückung während 30 Sekunden.

Die Reißkraft und die Reißdehnung wurden bestimmt nach ISO 1798.

Den Druckverformungsrest bestimmte man nach ISO 1856.

Die Ermüdung wurde nach ISO 3385 bestimmt.

A) Herstellung einer feinteiligen Polymerisatdispersion A von Kautschukteilchen

In einem gerührten Polymerisationsdruckgefäß mit einem Innenvolumen von 160 l wurde bei 20 bis 25 °C (Raumtemperatur) eine Lösung aus 0,18 kg $K_2SO_4$, 0,11 kg $Na_2SO_4$, 0,007 kg des Natriumsalzes der Ethylendiamintetraessigsäure (EDTA-Na), 0,007 kg Natriumdithionit, 0,17 kg einer 45 gew.-%igen Lösung eines Polykondensats aus Naphthalinsulfonsäure und Formaldehyd mit einem zahlenmittleren Molekulargewicht von 5000 in entionisiertem Wasser, 7,9 kg einer 12,5 gew.-%igen Lösung von Kaliumoleat in entionisiertem Wasser und 9,0 kg entionisiertes Wasser unter Rühren vorgelegt. Anschließend wurden weitere 46,8 kg entionisiertes Wasser zugefügt. Daraufhin wurden die nachfolgenden Bestandteile eines Redoxinitiatorsystems zugesetzt: 0,007 kg Natriumthionit, 0,007 kg Natriumformaldehydsulfoxylat, 0,003 kg Fe-(II)-$SO_4$ x 7 $H_2O$, 0,007 kg EDTA-Na, 0,013 kg Natriumphosphat ($Na_3PO_4$ x 10 $H_2O$) und 2,5 kg entionisiertes Wasser. Dann wurden 8,4 kg Styrol und 0,03 kg t-Dodecylmercaptan eingerührt. Schließlich wurden in das Polymerisationsgefäß 25,1 kg 1,3-Butadien eingeleitet. Das resultierende Gemisch wurde unter Rühren auf 10 °C gekühlt. Dann wurden 0,05 kg para-Menthanhydroperoxid auf einmal zugesetzt und dadurch die Polymerisation ausgelöst. Unter Aufrechterhaltung der Polymerisationstemperatur von 10 °C wurde bis zu einem, auf die Gesamtmenge der zu polymerisierenden Monomeren bezogenen, Polymerisationsumsatz von 35 Gew.-% weiterpolymerisiert. Anschließend wurden auf einmal nochmals 1,3 kg einer 12,5 gew.-%igen Lösung von Kaliumoleat in entionisiertem Wasser und 0,02 kg para-Menthanhydroperoxid unter Rühren zugesetzt. Danach wurde bis zu einem Polymerisationsumsatz von 90 Gew.-% unter Aufrechterhaltung der 10 °C die Polymerisation fortgeführt. Schließlich wurde die radikalische wässrige Emulsionspolymerisation durch Zusatz von 0,012 kg Diethylhydroxylamin gestoppt. Anschließend wurden die Restmonomeren dadurch entfernt, dass man die wässrige Polymerisatdispersion innerhalb von 2 Stunden auf 60 °C aufheizte, dabei das Polymerisationsgefäß [bis zu einem Druck von minimal 400 mbar (absolut)] evakuierte, anschließend Stickstoff bis zu einem Druck von 4 bar (absolut) aufpresste und diesen Vorgang innerhalb von 20 Stunden ca. achtzigmal wiederholte. Die wässrige Polymerisatdispersion A wies einen 1,3-Butadienrestgehalt von 49 ppm, einen Feststoffgehalt von 37,1 Gew.-% und die Polymerisatteilchen einen gewichtsmittleren Teilchendurchmesser $D_{50}$ von 50 nm auf.

B) Herstellung einer wässrigen Polymerisatdispersion B von verstärkend wirkenden Polymerisatteilchen

In einem Hochdruckrührkessel mit einem nominalen Inhalt von 160 l wurden bei Raumtemperatur unter Stickstoffatmosphäre

| | |
|---|---|
| 28,00 kg | entionisiertes Wasser |
| 2,50 kg | einer 34 gew.-%igen wässrigen Polystyrollatex mit einem gewichtsmittleren Teilchendurchmesser $D_{50}$ von 30 nm |
| 0,054 kg | EDTA-Na und |
| 0,73 kg | Zulauf 3 |

vorgelegt und unter Rühren auf 80 °C aufgeheizt. Bei Erreichen von 75 °C wurde zeitgleich beginnend Zulauf 1 während 2 Stunden und die Restmenge von Zulauf 3 während 5 Stunden zudosiert. 30 Minuten nach Beendigung von Zulauf 1 wurde mit Zulauf 2 begonnen, der innerhalb von 2 Stunden zudosiert wurde. Mit Beginn des Zulaufs 2 wurde die Temperaturregelung auf 90 °C eingestellt.

Nach Ende von Zulauf 3 wurde noch eindreiviertel Stunden bei 90 °C nachpolymerisiert. Nach Zugabe von 0,62 g EDTA-FeNa wurden zeitgleich beginnend die Zuläufe 4 und 5 während 2 Stunden parallel zudosiert. Anschließend wurde die Reaktionsmischung auf 60 °C abgekühlt und leichtflüchtige Bestandteile durch dreistündiges Strippen mit 4-bar Wasserdampf entfernt. Daran anschließend wurde die wässrige Polymerisatdispersion auf Raumtemperatur abgekühlt und über ein 200 μm Filter filtriert.

Zulauf 1

| 38,50 kg | Styrol |
|---|---|
| 6,50 kg | entionisiertes Wasser |
| 0,14 kg | einer 46 gew.-%igen Lösung von Kaliumhydroxid in entionisiertem Wasser |
| 4,75 kg | einer 17,4 gew.-%igen Lösung von Kaliumoleat in entionisiertem Wasser |
| 0,79 kg | einer 3 gew.-%igen Lösung von Natriumpyrophosphat in entionisiertem Wasser |

Zulauf 2

| 4,13 kg | Styrol |
|---|---|
| 12,38 kg | 1,3-Butadien |
| 0,02 kg | t-Dodecylmerkaptan |
| 6,50 kg | entionisiertes Wasser |
| 0,14 kg | einer 46 gew.-%igen Lösung von Kaliumhydroxid in entionisiertem Wasser |
| 4,75 kg | einer 17,4 gew.-%igen Lösung von Kaliumoleat in entionisiertem Wasser |
| 0,79 kg | einer 3 gew.-%igen Lösung von Natriumpyrophosphat in entionisiertem Wasser |

Zulauf 3

| 2,70 kg | entionisiertes Wasser |
|---|---|
| 0,22 kg | Natriumperoxodisulfat |

Zulauf 4

| 1,00 kg | entionisiertes Wasser |
|---|---|
| 0,12 kg | einer 70 gew.-%igen Lösung von t-Butylhydroperoxid in entionisiertem Wasser |

Zulauf 5

| 0,45 kg | entionisiertes Wasser |
|---|---|
| 0,04 kg | einer 79 gew.-%igen Lösung von Natriumformaldehydsulfoxylat in entionisiertem Wasser (Rongalit® C der BASF AG) |

Die wässrige Polymerisatdispersion B wies einen Feststoffgehalt von 50,8% und die Polymerisatteilchen einen zahlenmittleren Teilchendurchmesser von 158 nm auf.

C) Herstellung einer wässrigen Polymerisatdispersion C (Vergleichsdispersion)

In einem Hochdruckrührkessel mit einem nominalen Inhalt von 160 l wurden bei Raumtemperatur unter Stickstoffatmosphäre

| 31,00 kg | entionisiertes Wasser |
|---|---|

(fortgesetzt)

| 2,55 kg | einer 32 gew.-%igen wässrigen Polystyrollatex mit einem gewichtsmittleren Teilchendurchmesser $D_{50}$ von 30 nm |
|---|---|
| 0,054 kg | EDTA-Na und |
| 0,77 kg | Zulauf 2 |

vorgelegt und unter Rühren auf 80 °C aufgeheizt. Bei Erreichen von 75 °C wurde zeitgleich beginnend Zulauf 1 während 4 Stunden und die Restmenge von Zulauf 2 während 4,5 Stunden zudosiert. Anschließend wurde noch 30 Minuten nachpolymerisiert.

Nach Zugabe von 0,62 g EDTA-FeNa wurden zeitgleich beginnend die Zuläufe 3 und 4 während 2 Stunden parallel zudosiert. Anschließend wurde die Reaktionsmischung auf 60 °C abgekühlt und leichtflüchtige Bestandteile durch dreistündiges Strippen mit 4-bar Wasserdampf entfernt. Daran anschließend wurde die wässrige Polymerisatdispersion auf Raumtemperatur abgekühlt und über ein 200 μm Filter filtriert.

Zulauf 1

| 55,00 kg | Styrol |
|---|---|
| 14,00 kg | entionisiertes Wasser |
| 1,10 kg | einer 10 gew.-%igen Lösung von Kaliumhydroxid in entionisiertem Wasser |
| 2,47 kg | einer 17,4 gew.-%igen Lösung von Kaliumoleat in entionisiertem Wasser |
| 6,40 kg | einer 45 gew.-%igen Lösung eines Kondensats von Naphthalinsulfonsäure und Formaldehyd in entionisiertem Wasser (Tamol® NN 4501 der BASF AG) |
| 1,58 kg | einer 3 gew.-%igen Lösung von Natriumpyrophosphat in entionisiertem Wasser |

Zulauf 2

| 2,90 kg | entionisiertes Wasser |
|---|---|
| 0,17 kg | Natriumperoxodisulfat |

Zulauf 3

| 0,70 kg | entionisiertes Wasser |
|---|---|
| 0,12 kg | einer 70 gew.-%igen Lösung von t-Butylhydroperoxid in entionisiertem Wasser |

Zulauf 4

| 0,47 kg | entionisiertes Wasser |
|---|---|
| 0,04 kg | einer 79 gew.-%igen Lösung von Natriumformaldehydsulfoxylat in entionisiertem Wasser |

Die wässrige Polymerisatdispersion C wies einen Feststoffgehalt von 50,0% und die Polymerisatteilchen einen zahlenmittleren Teilchendurchmesser von 155 nm auf.

D) Durchführung der erfindungsgemäßen Druckcoagglomeration

Es wurden 8720 g der Kautschukdispersion A und 1280 g der wässrigen Verstärkerdispersion B homogen gemischt und bei 21 °C, einem Druck von 220 bar und einem Durchsatz von 60 Litern pro Stunde einer Druckcoagglomeration unterzogen (Gerät: Hochdruckpumpe LAB 60-10 TBS der Fa. APV Gaulin GmbH; Aufrechterhaltung eines konstanten Druckes durch variablen Spalt). Die wässrige Polymerisatdispersion wies einen gewichtsmittleren Teilchendurchmesser $D_{50}$ von 670 nm auf.

Die druckcoagglomerierte wässrige Polymerdispersion wurde mittels eines Dünnschichtverdampfers aufkonzentriert. Die Manteltemperatur des Verdampfers betrug 100 bis 130 °C bei einem Druck im Verdampferraum von 80 bis 120 mbar (absolut).

Nach dem Aufkonzentrieren wurde eine wässrige Polymerisatdispersion I mit einem Feststoffgehalt von 70,7% und einer Brookfield-Viskosität von 2160 mPas erhalten.

E) Druckhomoagglomeration und anschließende Beimischung der verstärkend wirkenden Polymerisatdispersionen

Die wässrige Kautschukdispersion A wurde unter den bei D) beschriebenen Bedingungen agglomeriert und aufkonzentriert. Es wurde eine wässrige Polymerisatdispersion E mit einem Feststoffgehalt von 72,0% und einer Brookfield-Viskosität von 1500 mPas erhalten. Der gewichtsmittlere Teilchendurchmesser $D_{50}$ betrug 580 nm.

- Eine Polymerisatdispersion II wurde hergestellt, indem man bei Raumtemperatur 5000 g der wässrigen Polymerisatdispersion E, 78 g einer 17,4 gew.-%igen Lösung von Kaliumoleat in entionisiertem Wasser und 1064 g der wässrigen Polymerisatdispersion B homogen mischte.

- Eine Polymerisatdispersion III wurde hergestellt, indem man bei Raumtemperatur 5000 g der wässrigen Polymerisatdispersion E, 104 g einer 17,4 gew.-%igen Lösung von Kaliumoleat in entionisiertem Wasser und 684 g der wässrigen Vergleichsdispersion C homogen mischte.

F) Herstellung eines Polymerisatschaums

In jede der erhaltenen wässrigen Polymerisatdispersionen I, II und III wurde, bezogen auf eine Feststoffmenge von jeweils 1000 g, nacheinander in Form von 50 gew.-%igen wässrigen Suspensionen

| | |
|---|---|
| 22,5 g | Schwefelpulver (Typ VU 503 der Firma Synthomer GmbH, Deutschland) |
| 20 g | Zinkethylphenyldithiocarbamat |
| 15 g | Diphenylguanidin |
| 10 g | Antioxydant auf Basis sterisch gehinderter Phenole (Wingstay® L der Fa. Goodyear) und |
| 30 g | feinteiliges Zink-(II)-oxid (Typ Weißsiegel der Firma Mercura Chemical GmbH, Deutschland) |

eingerührt.

Das resultierende Gemisch wurde mittels eines Schlagschäumers auf das 9 bis 10-fache seines Volumens aufgeschäumt. In den Schaum wurden innerhalb von 2 Minuten 120 g einer 25 gew.-%igen Suspension von $Na_2SiF_6$ in entionisiertem Wasser eingearbeitet.

Anschließend wurde die aufgeschlagene Masse in eine Metallform (350 x 330 x 50 mm) gefüllt und der überschüssige Schaum glatt abgestrichen (Schaumplatte). Die Form ließ man 10 Minuten bei Raumtemperatur stehen, wobei die Schaummasse gelierte. Zur Vulkanisation der Schaummasse wurde die Form anschließend für 30 Minuten in einen mittels 100 °C heißem Wasserdampf beheizten Vulkanisationsofen gegeben.

In einem weiteren Versuch wurde die aufgeschlagene Masse in eine kleine geschlossene, auf 50 °C aufgeheizte Matratzenform (350 x 390 x 100 mm) gefüllt. Dabei war die geschlossene Matratzenform so mit Füllkörpern bestückt, dass die Schaummatratze eine scheinbare Dichte aufwies, die in etwa 60 % der Dichte der Schaumplatte entsprach. Zur Gelierung und Vulkanisation der Schaummasse wurde die Form anschließend für 45 Minuten in einen mittels 100 °C heißem Wasserdampf beheizten Vulkanisationsofen gegeben.

Danach wurden die resultierenden Schaumgummiformkörper den Formen entnommen, mit entionisiertem Wasser gewaschen, 8 Stunden bei 80 °C getrocknet und gemäß der DIN-ISO 471 konditioniert. Die erhaltenen Schäume wiesen die in der folgenden Tabelle aufgelisteten Eigenschaften auf:

| Polymerisat-dispersion | | | | | | I | II | III |
|---|---|---|---|---|---|---|---|---|
| Schaumplatte | Dichte | | | | g/l | 107 | 100 | 101 |
| | Härte | | | | N | 250 | 250 | 245 |
| | Reißkraft | | | | kPa | 155 | 130 | 96 |

(fortgesetzt)

| Polymerisat-dispersion | | | | | | I | II | III |
|---|---|---|---|---|---|---|---|---|
| | Reißdehnung | | | % | | 280 | 275 | 215 |
| | Druckverformungsrest | | | % | | 10 | 13 | 15 |
| Matratze | normierte Härte[1] | | | N | | 122 | 134 | 119 |
| | Ermüdung[2] | nach 0 h | ΔH Δh | % % | | 11 3 | 20 3 | 17 2 |
| | | nach 24 h | ΔH Δh | % % | | 0 1 | 12 2 | 10 1 |

1) Härte normiert auf eine Dichte von 60 g/Liter

2) ΔH = Härteverlust, Δh = Dickeverlust

Aus der Tabelle ist ersichtlich, dass der über die Stufe der Druckcoagglomeration zugängliche Latexschaum der Polymerisatdispersion I und der nach Druckhomoagglomeration und nachträglichem Beimischen der erfindungsgemäßen Verstärkerdispersion zugängliche Latexschaum der Polymerisatdispersion II insbesondere im Hinblick auf Reißkraft, Reißdehnung, Druckverformungsrest und Ermüdung im Vergleich zu dem aus der Vergleichsdispersion III zugänglichen Latexschaum zu überzeugen vermögen.

## Patentansprüche

1. Wässrige Polymerisatdispersion, enthaltend Kautschukteilchen und verstärkend wirkende Polymerisatteilchen, wobei die Kautschukteilchen aus

   - x Gew.-% aromatischer Monovinylverbindung und
     y Gew.-% aliphatischem konjugiertem Dien mit 4 bis 9 Kohlenstoffatomen
     in einpolymerisierter Form aufgebaut sind, und

   - x ein Wert von 5 bis 35 und
     y ein Wert von 65 bis 95 ist,

   und die verstärkend wirkenden Polymerisatteilchen zu

   - 50 bis 90 Gew.-% aus einer ersten, harten Polymerisatphase A und
     10 bis 50 Gew.-% aus einer zweiten, weichen Polymerisatphase B aufgebaut sind, wobei

   - die Polymerisatphase A eine Glasübergangstemperatur oberhalb 70 °C aufweist und zu 90 bis 100 Gew.-% aus aromatischer Monovinylverbindung und bis zu 10 Gew.-% aus aliphatischem konjugiertem Dien mit 4 bis 9 Kohlenstoffatomen in einpolymerisierter Form besteht und

   - die Polymerisatphase B zu
     x +/- ≤ 3 Gew.-% aus der in den Kautschukteilchen verwendeten aromatischen Monovinylverbindung und
     y +/- 3 ≤ Gew.-% aus dem in den Kautschukteilchen verwendeten aliphatischen konjugierten Dien mit 4 bis 9 Kohlenstoffatomen in einpolymerisierter Form besteht.

2. Wässrige Polymerisatdispersion nach Anspruch 1, wobei die Glasübergangstemperatur der Polymerisatphase A ≥ 90 °C ist.

3. Wässrige Polymerisatdispersion nach Anspruch 1 und 2, wobei die aromatische Monovinylverbindung Styrol und das aliphatische konjugierte Dien 1,3-Butadien ist.

4. Wässrige Polymerisatdispersion nach einem der Ansprüche 1 bis 3, enthaltend 1 bis 40 Gew.-Teile verstärkend wirkende Polymerisatteilchen pro 100 Gew.-Teilen Kautschukteilchen.

**5.** Verfahren zur Herstellung einer wässrigen Polymerisatdispersion gemäß einem der Ansprüche 1 bis 4, **dadurch gekennzeichnet, dass**

- die Kautschukteilchen und die verstärkend wirkenden Polymerisatteilchen in separaten Reaktionen durch radikalisch initiierte wässrige Emulsionspolymerisation hergestellt und daran anschließend

- die wässrigen Polymerisatdispersionen der Kautschukteilchen und der verstärkend wirkenden Polymerisatteilchen unter homogener Mischung vereinigt werden.

**6.** Verfahren nach Anspruch 5, **dadurch gekennzeichnet, dass** die vereinigte wässrige Polymerisatdispersion, welche die Kautschuk- und die verstärkend wirkenden Polymerisatteilchen in homogener Verteilung enthält, einem Agglomerationsschritt unterzogen wird.

**7.** Verfahren nach Anspruch 6, **dadurch gekennzeichnet, dass** der Agglomerationsschritt mittels Druckagglomeration erfolgt.

**8.** Verwendung der Polymerisatdispersion gemäß einem der Ansprüche 1 bis 4 oder der gemäß der Verfahren der Ansprüche 5 bis 7 hergestellten Polymerisatdispersion zur Herstellung von Latexschäumen und Schaumformartikeln.

**9.** Latexschäume und Schaumformartikel, hergestellt unter Verwendung einer Polymerisatdispersion gemäß einem der Ansprüche 1 bis 4 oder einer nach den Verfahren gemäß einem der Ansprüche 5 bis 7 hergestellten Polymerisatdispersion.

## Claims

**1.** An aqueous polymer dispersion comprising rubber particles and polymer particles having a reinforcing action, wherein the rubber particles are made up of

- x% by weight of an aromatic monovinyl compound and
  y% by weight of an aliphatic conjugated diene having from 4 to 9 carbon atoms
  in copolymerized form, and

- x is from 5 to 35 and
  y is from 65 to 95,

and the polymer particles having a reinforcing action are made up of

- from 50 to 90% by weight of a first, hard polymer phase A and
  from 10 to 50% by weight of a second, soft polymer phase B, where

- the polymer phase A has a glass transition temperature above 70°C and comprises from 90 to 100% by weight of an aromatic monovinyl compound and up to 10% by weight of an aliphatic conjugated diene having from 4 to 9 carbon atoms in copolymerized form and

- the polymer phase B comprises
  x $\pm$ $\le$ 3% by weight of the aromatic monovinyl compound used in the rubber particles and
  y $\pm$ $\le$ 3% by weight of the aliphatic conjugated diene having from 4 to 9 carbon atoms used in the rubber particles in copolymerized form.

**2.** An aqueous polymer dispersion as claimed in claim 1, wherein the glass transition temperature of the polymer phase A is $\ge$ 90°C.

**3.** An aqueous polymer dispersion as claimed in claim 1 or 2, wherein the aromatic monovinyl compound is styrene and the aliphatic conjugated diene is 1,3-butadiene.

**4.** An aqueous polymer dispersion as claimed in any of claims 1 to 3 comprising from 1 to 40 parts by weight of polymer particles having a reinforcing action per 100 parts by weight of rubber particles.

5. A process for preparing an aqueous polymer dispersion as claimed in any of claims 1 to 4, which comprises

- preparing the rubber particles and the polymer particles having a reinforcing action in separate reactions by free-radical-initiated aqueous emulsion polymerization and subsequently

- combining the aqueous polymer dispersions of the rubber particles and of the polymer particles having a reinforcing action and mixing them homogeneously.

6. A process as claimed in claim 5, wherein the combined aqueous polymer dispersion in which the rubber particles and the polymer particles having a reinforcing action are homogeneously dispersed is subjected to an agglomeration step.

7. A process as claimed in claim 6, wherein the agglomeration step is carried out by means of pressure agglomeration.

8. The use of a polymer dispersion as claimed in any of claims 1 to 4 or a polymer dispersion prepared by a process as claimed in any of claims 5 to 7 for producing latex foams and molded foam articles.

9. A latex foam or molded foam article produced using a polymer dispersion as claimed in any of claims 1 to 4 or a polymer dispersion prepared by a process as claimed in any of claims 5 to 7.


**Revendications**

1. Dispersion aqueuse de polymère, contenant des particules de caoutchouc et des particules de polymère à action de renforcement, dans laquelle les particules de caoutchouc sont constituées, sous une forme copolymérisée, de x% en poids d'un composé monovinylique aromatique, et de y% en poids d'un diène conjugué aliphatique comportant 4 à 9 atomes de carbone, x ayant une valeur de 5 à 35, et y une valeur de 65 à 95, et les particules de polymère à action de renforcement sont constituées pour 50 à 90% en poids d'une première phase de polymère dure A, et pour 10 à 50% en poids d'une deuxième phase de polymère souple B, la phase de polymère A présentant une température de transition vitreuse supérieure à 70°C et étant constituée pour 90 à 100% en poids d'un composé monovinylique aromatique et jusqu'à 10% en poids d'un diène conjugué aliphatique comportant 4 à 9 atomes de carbone, sous une forme copolymérisée, et la phase de polymère B étant constituée, sous une forme copolymérisée pour x +/- ≤ 3% en poids du composé monovinylique aromatique utilisé dans les particules de caoutchouc, et pour y +/- ≤ 3% en poids du diène conjugué aliphatique comportant 4 à 9 atomes de carbone, utilisé dans les particules de caoutchouc.

2. Dispersion aqueuse de polymère suivant la revendication 1, dans laquelle la température de transition vitreuse de la phase de polymère A est ≥ 90°C.

3. Dispersion aqueuse de polymère suivant la revendication 1 ou 2, dans laquelle le composé monovinylique aromatique est du styrène et le diène conjugué aliphatique du 1,3-butadiène.

4. Dispersion aqueuse de polymère suivant l'une des revendications 1 à 3, contenant 1 à 40 parties en poids de particules de polymère à action de renforcement par 100 parties en poids de particules de caoutchouc.

5. Procédé de préparation d'une dispersion aqueuse de polymère suivant l'une des revendications 1 à 4, **caractérisé en ce que** les particules de caoutchouc et les particules de polymère à action de renforcement sont préparées dans des réactions séparées par polymérisation en émulsion aqueuse amorcée par voie radicalaire, et **en ce qu'**à la suite de cela les dispersions aqueuses de polymère des particules de caoutchouc et des particules de polymère à action de renforcement sont réunies par un mélange homogène .

**6.** Procédé suivant la revendication 5, **caractérisé en ce que** la dispersion aqueuse de polymère réunie, qui contient les particules de caoutchouc et les particules de polymère à action de renforcement dans une répartition homogène, est soumise à une étape d'agglomération.

**7.** Procédé suivant la revendication 6, **caractérisé en ce que** l'étape d'agglomération est effectuée au moyen d'une agglomération sous pression.

**8.** Utilisation de la dispersion de polymère suivant l'une des revendications 1 à 4 ou de la dispersion de polymère préparée selon le procédé des revendications 5 à 7, pour la fabrication de mousses de latex et d'articles moulés en mousse.

**9.** Mousses de latex et articles moulés en mousse, fabriqués par l'utilisation d'une dispersion de polymère suivant l'une des revendications 1 à 4 ou d'une dispersion de polymère préparée selon le procédé suivant une des revendications 5 à 7.